# EUROPÄISCHE PATENTSCHRIFT

(11) **EP 1 699 680 B1**
(45) Veröffentlichungstag und Bekanntmachung des Hinweises auf die Patenterteilung: **30.05.2007**
(21) Anmeldenummer: 04803680.0
(22) Anmeldetag: 09.12.2004
(51) Int. Cl.: B62D 65/02, B23P 19/06

(54) **AUTOMATISCHE SCHRAUBEREINRICHTUNG UND FÜGEVERFAHREN**
AUTOMATIC SCREWDRIVER DEVICE AND JOINING METHOD
DISPOSITIF DE VISSAGE AUTOMATIQUE ET PROCEDE D'ASSEMBLAGE

(30) Priorität: 12.12.2003 DE 20319310 U
(43) Veröffentlichungstag der Anmeldung: 13.09.2006
(73) Patentinhaber: KUKA Schweissanlagen GmbH, D-86165 Augsburg (DE)
(72) Erfinder: ZACH, Vitus, 86163 Augsburg (DE); ZIMMER, Rudolf, 66687 Wadern (DE)
(74) Vertreter: Ernicke, Klaus Stefan
(86) Internationale Anmeldenummer: PCT/EP2004/014023
(87) Internationale Veröffentlichungsnummer: WO 2005/056375

(56) Entgegenhaltungen:
- EP-A- 0 232 018
- EP-A- 0 637 646
- WO-A-03/066279
- DE-A1- 3 729 084
- DE-C1- 19 521 061
- US-A- 5 125 298
- PATENT ABSTRACTS OF JAPAN Bd. 008, Nr. 009 (M-268), 14. Januar 1984 (1984-01-14) & JP 58 171227 A (ASAHI SEIKI KOGYO KK), 7. Oktober 1983 (1983-10-07)

## Beschreibung

Die Erfindung betrifft eine automatische Schraubereinrichtung und eine Fügeverfahren mit den Merkmalen im Oberbegriff des Verfahrens- und Vorrichtungshauptanspruchs.

Eine solche automatische Schraubereinrichtung zum Verschrauben von Karosserieteilen mittels eines zwischengeschalteten Spindelträgers ist aus der DE 37 29 084 A1 bekannt. Sie besteht aus einem Basisträger und zwei daran zweiachsig verfahrbar gelagerten automatischen Schraubwerkzeugen, die mit den am Spindelträger befindlichen Spindelverlängerungen in Schraubeingriff treten. Die für die Zweiachsbewegung benutzte Verstelleinrichtung besteht jeweils aus einer Quertraverse, die in dem umlaufenden schienenförmigen Rahmen des Basisträgers längs verfahrbar gelagert ist. An jeder Quertraverse ist ein einzelnes Schraubwerkzeug mittels eines Laufwerks axial verfahrbar gelagert. Diese zweiachsige Verstelleinrichtung ist ähnlich wie ein Kranlaufwerk gestaltet. Die Konstruktion beschränkt die Zahl und die Bewegungsmöglichkeiten der Schraubwerkzeuge, die einzeln verstellt werden müssen. Dies hat zur Folge, dass jedes Schraubwerkzeug mehrere Schraubvorgänge an unterschiedlichen Stellen durchführen und dafür entsprechende Verfahrwege zurücklegen muss. Dies ist nachteilig für die Taktzeit.

Es ist Aufgabe der vorliegenden Erfindung, eine bessere automatische Schraubertechnik aufzuzeigen.

Die Erfindung löst diese Aufgabe mit den Merkmalen im Verfahrens- und Vorrichtungshauptanspruch. Die beanspruchte Schraubertechnik hat den Vorteil, dass die Zahl der Schraubwerkzeuge nach Bedarf verändert und insbesondere vergrößert werden kann. Ferner verbessern sich die Bewegungs- und Verstellmöglichkeiten der Schraubwerkzeuge. Mehrere Schraubwerkzeuge können auf einer Schlitteneinheit in Schraubergruppen zusammengefasst und als ganze Gruppe verstellt werden, wobei bei Bedarf über die gegenseitige Verstellbarkeit, z.B. eine Teleskopierbarkeit, der Schlittenstufen auch eine Verstellung innerhalb der Schraubergruppe möglich ist.

Die Schraubeinrichtung bietet ferner den Vorteil, dass die Schraubwerkzeuge individuelle zusätzliche Querverstellungen haben können, um in der Hauptebene des Basisträgers zweiachsig oder mehrachsig verstellbar zu sein. Durch diese Aufspaltung brauchen die Schlitteneinheiten und die Querverstellungen wenig Platz, was andererseits die Möglichkeit bietet, eine Vielzahl von Schraubwerkzeugen an beliebigen Positionen und mit großen Bewegungsspielräumen auf dem Basisträger unterzubringen.

Die einzelne Schlitteneinheit und die anderen Verstelleinrichtungen haben eine geringere Breite und Länge als der Basisträger. Dies ermöglicht es, mehrere Schlitteneinheiten nebeneinander in der längs gerichteten x-Achse und/oder der quer gerichteten y-Achse des Basisträgers unterzubringen. In Längs- und Querrichtung können die Schraubwerkzeuge dadurch beliebig und ohne Kollisionsgefahr gegeneinander ein- oder mehrachsig verstellt werden. Bei der vorbekannten Schraubereinrichtung mit den Quertraversen ist dies nicht möglich.

Die beanspruchte Schraubereinrichtung bietet durch die beliebige Schraubwerkzeugbestückung und die erhöhten Beweglichkeiten eine große Flexibilität bei der Einrichtung und Anpassung, aber auch bei der Umrüstung an unterschiedliche Bauteile, insbesondere Fahrzeugkarosserien, und evtl. zugehörige Spindelträger. Dies ist vor allem bei der Endmontage von Kraftfahrzeugen von Vorteil, weil hier häufig die Modelle oder auch innerhalb eines Modells die Karosserietypen, z.B. Limousine und Caravan etc., wechseln. Variationen der Bodengruppe und der Schraubstellen ergeben sich z.B. durch unterschiedliche Fahrzeuglängen, Motor- und Getriebearten, Allradantrieb, Abgasanlagen, Sport- oder Komfort-Fahrgestelle etc.. Auch Positionsvariationen der der Bodengruppe sind möglich. Die Schraubereinrichtung lässt sich dann schnell und einfach anpassen.

Durch die beliebig hohe Zahl an Schraubwerkzeugen kann wahlweise die Zahl der durchzuführenden Schraubvorgänge erhöht werden oder die Taktzeit vermindert werden. Dies verbessert die Auslastung und die Wirtschaftlichkeit. Außerdem ist es möglich, durch die einzelnen und unabhängig voneinander ansteuerbaren Schraubwerkzeuge beliebige Schraubfolgen zu wählen und einzustellen. Dies kann z.B. vorteilhaft sein, um Verformungen oder Verzügen der.Bauteile entgegen zu wirken.

Die Schraubereinrichtung hat ferner den Vorteil, dass sie mit dem Basisträger als ganzes über ein Fahrwerk und eine vorzugsweise flurgebundene Führung an einer Montagestation, insbesondere einer Schraubstation, ein- und ausgefahren werden kann. Dies ermöglicht insbesondere bei evtl. Störungen eine schnelle Umstellung auf manuellen Schraubbetrieb, wobei die Schraubereinrichtung aus dem Arbeitsbereich unter der Karosserie bzw. dem Spindelträger entfernt werden kann, um Platz für Werker mit handgeführten Schraubwerkzeugen zu schaffen.

Die beanspruchte Schraubereinrichtung ist vorzugsweise für eine Schraubtätigkeit an der Unterseite von Bauteilen oder Fahrzeugkarosserien vorgesehen. Dies kann eine in den Zeichnungen dargestellte mittelbare Schraubfunktion unter Zwischenschaltung eines beweglichen Spindelträgers mit Spindelverlängerungen sein. Alternativ ist eine unmittelbare Schraubtätigkeit an der Karosserie möglich. Evtl. Höhenanpassungen können dank der beanspruchten Konstruktion auf einfache und wenig aufwändige Weise über Sockel an den Schraubwerkzeugen erreicht werden. Die Schraubwerkzeuge selbst brauchen dadurch in der Höhe keine übermäßig großen Verstellwege zu haben.

Zudem können die Schraubwerkzeuge eigene verbesserte und vergrößerte Bewegungsfreiheiten für ihre Schraubeinheiten haben. Hierbei sind Höhen- und/oder Schwenkverstellungen möglich. Hierbei kann die Schraubeinheit mit Schraubspindel und Spindelantrieb als ganzes gegenüber der Konsole verstellt werden, was die konstruktive Ausbildung und die Steuerung vereinfacht. Durch Anschluss der Spindelantriebe und der verschiedenen Verstelleinrichtungen an eine gemeinsame Steuerung ist ein vollautomatischer und hochflexibler Betrieb der Schraubereinrichtung möglich.

Die beanspruchte Schraubereinrichtung kann ferner in ihrer Höhenausbildung beliebig gestaltet werden. Insbesondere können trotz klein gehaltener Verstellwege durch die Konsolengestaltung große Bauhöhen erreicht werden, was zur Schaffung eines ausreichend großen Freiraums unter den Bauteilen bzw. der dem Spindelträger für eine manuelle Schraubertätigkeit im Störungsfall von Vorteil ist. Zudem lässt sich für alle Schraubwerkzeuge eine im Wesentlichen gleiche Störkontur erreichen.

Die Schraubereinrichtung ermöglicht es ferner, eine Zentrier- und Aushubeinheit am Basisträger unterzubringen, die vorzugsweise eine vertikale zusätzliche Beweglichkeit zum Ausheben und Einweisen der Bauteile bzw. des Spindelträgers hat.
In den Unteransprüchen sind weitere vorteilhafte Ausgestaltung der Erfindung angegeben.

Die Erfindung ist in den Zeichnungen beispielsweise und schematisch dargestellt. Im Einzelnen zeigen:
- Figur 1:: eine vereinfachte schematische Seitenansicht einer Schraubstation mit einer Fahrzeugkarosserie und einer automatischen Schraubereinrichtung,
- Figur: 2: eine perspektivische Ansicht der Schraubereinrichtung von Figur 1,
- Figur 3:: eine Draufsicht auf eine im Detail andere Schraubereinrichtung,
- Figur 4:: eine Seitenansicht einer Schraubereinrichtung gemäß Figur 2,
- Figur 5 bis 7:: ein höhenverstellbares Schraubwerkzeug in verschiedenen Ansichten und
- Figur 8 bis 10:: ein schwenk- und höhenverstellbares Schraubwerkzeug in verschiedenen Ansichten.

Die Erfindung befasst sich mit einer automatischen Schraubereinrichtung (3) und außerdem auch mit einer damit ausgerüsteten Schraubstation (1).

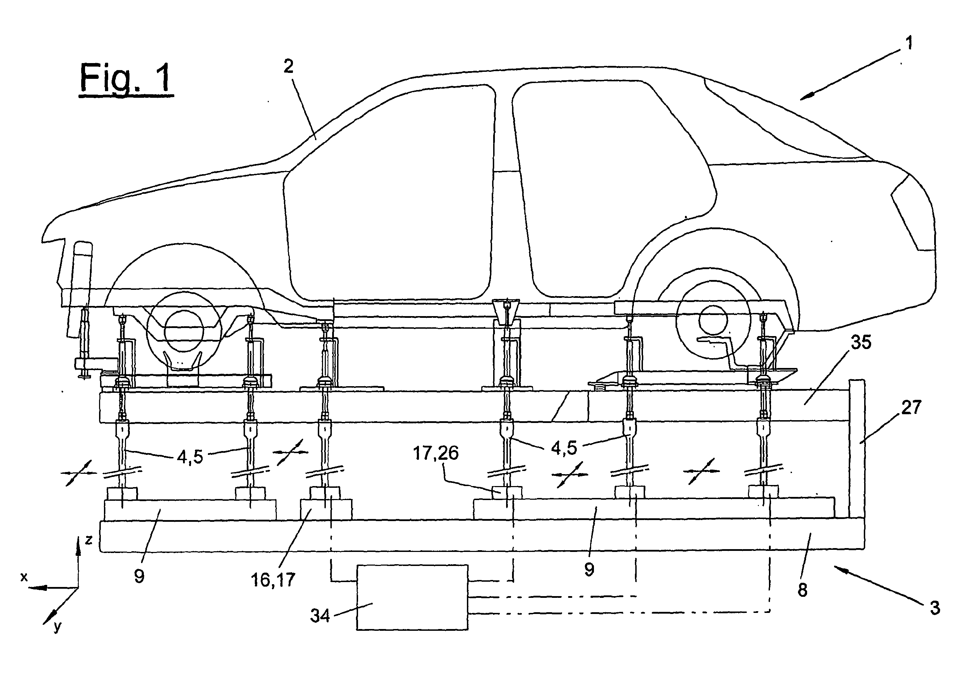

Figur 1 zeigt ausschnittsweise eine Montagestation (1), die hier als Schraubstation für ein oder mehrere Bauteile (2) ausgebildet ist. Hierbei handelt es sich vorzugsweise um eine Fahrzeugkarosserie und deren Teile. Hierbei werden z.B. Fahrgestellteile, insbesondere eine komplette Bodengruppe mit Motor, Achsen etc., mit der Karosserie verbunden und verschraubt. Die Karosserie (2) oder andere Bauteile werden mit einem nicht dargestellten Förderer, z.B. einem C-Gehänge, in die Schraubstation (1) gebracht und nach dem Montagevorgang wieder abtransportiert. Die Bauteile (2) werden auf geeigneten Stütz- und Spannvorrichtungen positionsgenau gelagert.

Die Fahrgestellteile werden mit einem geeigneten Aggregateträger in die Montagestation (1) gebracht, der zugleich ein Spindelträger (35) mit mehreren entsprechend der Schraubstellen positionierten und evtl. beweglichen Spindelverlängerungen sein kann. Der Spindelträger (35) kann alternativ getrennt vom Aggregateträger angeordnet sein. Er kann ansonsten in beliebig geeigneter Weise ausgebildet sein, z.B. entsprechend der DE-37 29 084 A1.

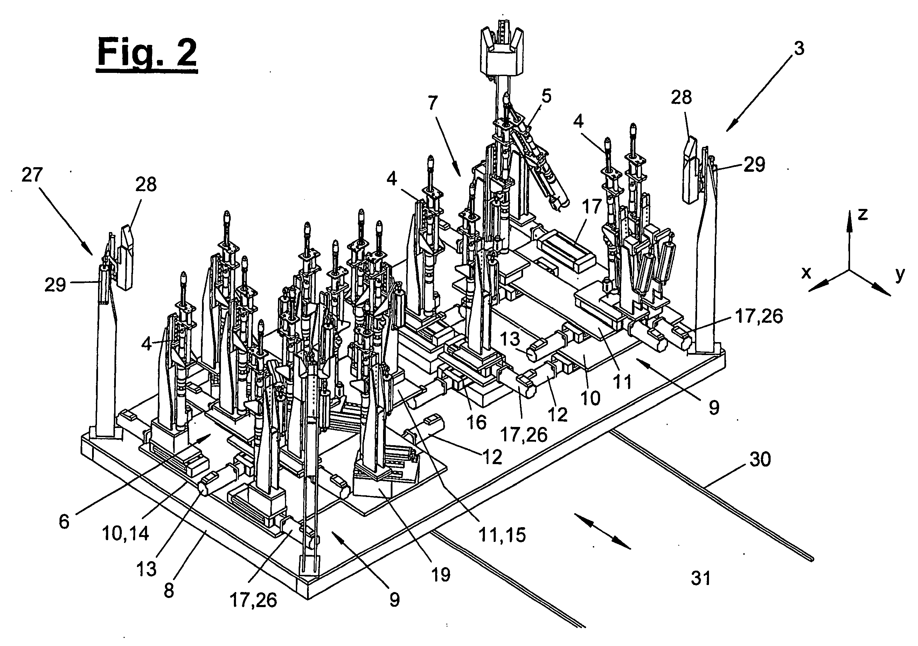

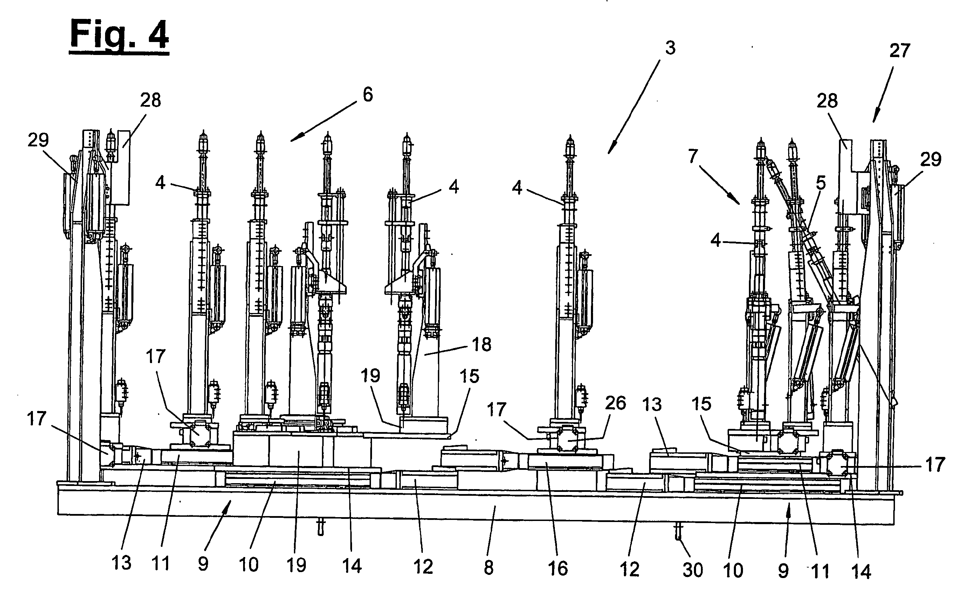

Für den Montagevorgang und die Bauteilverschraubung wird eine automatische Schraubereinrichtung (3) eingesetzt, die in Figur 1 schematisch dargestellt und in Figur 2 bis 10 detaillierter dargestellt ist. Sie besteht aus mindestens einem Basisträger (8) und mehreren Schraubwerkzeugen (4,5) mit Verstelleinrichtungen (9,16,17,24,25).

Der Schraubvorgang findet unter Zwischenschaltung des in Figur 1 dargestellten Spindelträgers (35) statt. Die Schraubwerkzeuge (4,5) werden an die Spindelverlängerungen zugestellt und dort mit ihren Schraubköpfen (22) an unten liegenden Schrauberaufnahmen in Eingriff gebracht. Die Spindelverlängerungen sind zuvor mit den entsprechenden Schraubmitteln, insbesondere Schrauben oder Muttern, bestückt worden.

Alternativ kann in einer nicht dargestellten Ausführungsform der Schraubvorgang mittels der Schraubwerkzeuge (4,5) direkt an den Bauteilen (2) durchgeführt werden, wobei die Schraubwerkzeuge (4,5) mit den entsprechenden Schraubmitteln, insbesondere Schrauben oder Muttern, bestückt werden.

Die Schraubwerkzeuge (4,5) sind in großer Zahl vorhanden. Ihre Zahl kann der Zahl der Schraubstellen am Bauteil (2) und der Zahl der Spindelverlängerungen entsprechen. Wenn unterschiedliche Bauteiltypen im flexiblen Mix gefahren werden, kann die Zahl der Schraubwerkzeuge (4,5) sich nach der größten vorkommenden Schraubstellen- und Spindelverlängerungszahl richten.

In der gezeigten Ausführungsform erfolgt der Schraub- und Fügevorgang von unten her mit stehenden und in der z-Achse zustellbaren Schraubwerkzeugen (4,5). Diese Anordnung kann alternativ auch anders sein.

Der Basisträger (8) ist tafelförmig ausgebildet und hat vorzugsweise eine Quaderform. Er kann plattenförmig gestaltet sein und eine geschlossene obere und ggf. auch untere Oberfläche aufweisen. Alternativ kann es sich auch um einen Gitterrahmen handeln. Der Basisträger (8) bildet dabei einen Flächenträger.

Der Basisträger (8) kann mit einer geeigneten Hubvorrichtung (nicht dargestellt) höhenverstellbar sein. Vorzugsweise hat der Basisträger (8) an der Unterseite ein Laufwerk, mit dem er an der Schraubstation (1) ein- und ausgefahren werden kann. Hierfür kann am Stationsboden (31) eine geeignete Führung (30), z.B. eine gerade Schienenführung vorhanden sein. Alternativ kann auch eine Drehbeweglichkeit oder eine andere geeignete Kinematik vorhanden sein. Der Basisträger (8) lässt sich hierdurch zwischen einer Arbeitsposition an oder unter den Bauteilen (2) und einer zurückgezogenen Ruheposition unter Freigabe des Arbeitsraums an oder unter den Bauteilen (2) mit einem geeigneten Antrieb hin und her bewegen.

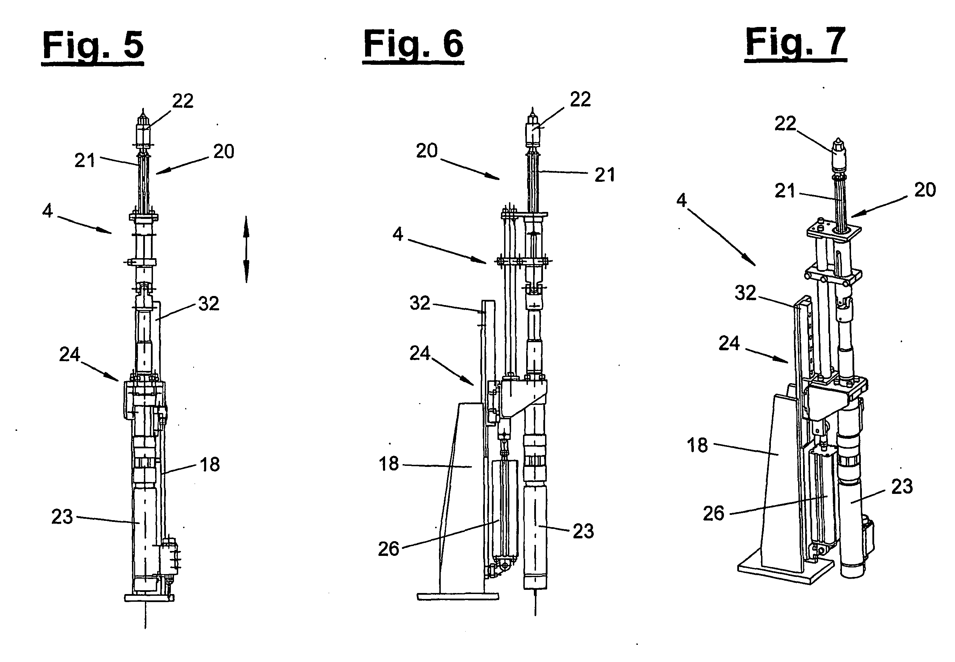

Am Basisträger (8) sind mehrere Schraubwerkzeuge (4,5) einzeln oder in Schraubergruppen (6,7) angeordnet. Sie befinden sich dabei vorzugsweise allesamt auf der Oberseite des Basisträgers (8) und ragen vertikal oder schräg nach oben. Die Ausgestaltung der Schraubwerkzeuge (4,5) wird nachfolgend an Hand der Figuren 5 bis 10 erläutert.

Die Schraubwerkzeuge (4,5) sind in der Hauptebene des Basisträgers (8) in ein oder zwei Richtungen entlang der x- und y-Achse mittels Verstelleinrichtungen (9,16,17) beweglich gelagert. Die x-Achse erstreckt sich hierbei längs der Schraubstation (1) und der Transferlinie. Mindestens eine der Verstelleinrichtungen ist dabei als mehrstufige und teleskopierbare oder kaskadierbare Schlitteneinheit (9) ausgebildet.

Die Schlitteneinheit (9) besitzt mehrere in mindestens einer Linearachse relativ zueinander bewegliche und getrennt steuerbare Schlittenstufen (10,11), die aneinander gelagert und im gezeigten Ausführungsbeispiel vorzugsweise aufeinander angeordnet sind. Die jeweils obere Schlittenstufe (11) stützt sich hierbei auf der unteren Schlittenstufe (10) ab und ist gegenüber dieser im Sinne der Teleskop- oder Kaskadenanordnung beweglich. Die erste und untere Schlittenstufe (10) ist hierbei auf der Oberseite des Basisträgers (8) in geeigneter Weise mit einer Gleit- oder Wälzführung beweglich gelagert. Die zweite Schlittenstufe (11) ist auf der ersten Schlittenstufe (10) in entsprechender Weise beweglich gelagert. In gleicher Weise können weitere Schlittenstufen in einer Kaskade oder einer Teleskopanordnung aufeinander oder ggf. auch nebeneinander angeordnet sein. Z.B. können auf der ersten unteren Schlittenstufe (10) zwei oder mehr Schlittenstufen gelagert sein, die dann vorzugsweise getrennt und unabhängig voneinander beweglich sind.

Die verschiedenen Schlittenstufen (10,11) der mehrstufigen Schlitteneinheit (9) werden z.B. allesamt teleskopartig in der gleichen Richtung bewegt. In der gezeigten Ausführungsform besteht die Beweglichkeit nur in einer Achse, z.B. der x-Achse. Alternativ kann auch eine Beweglichkeit in der y-Achse oder auch mit schräger Ausrichtung in der x- und y-Achse bestehen.

Die Schlittenstufen (10,11) werden jeweils von einem vorzugsweise plattenförmigen Subträger (14,15) mit einem zugehörigen steuerbaren Schlittenantrieb (12,13), z.B. einem elektromotorischen Antrieb, und der vorgenannten führenden Gleit- oder Wälzlagerung gebildet. Auf den vorzugsweise parallel zur Oberfläche des Basisträgers (8) ausgerichteten Subträgern (14,15) sind jeweils ein oder mehrere Schraubwerkzeuge (4,5) an den gewünschten Positionen angeordnet. Die zwischen den Schlittenstufen auftretenden Höhenunterschiede in der z-Achse zwischen den Schraubwerkzeugen (4,5) können durch passgenaue Sockel (19) oder dergleichen ausgeglichen werden. Über die Sockel (19) können auch feste Schrägstellungen erreicht werden.

Die auf einer mehrstufigen Schlitteneinheit (9) befindlichen Schraubwerkzeuge (4,5) bilden jeweils eine Schraubergruppe (6,7). Diese Schraubergruppe (6,7) ist mit der ersten Schlittenstufe (10) als Ganzes bzw. gemeinsam auf dem Basisträger (8) über die Schlittenbewegung verstellbar. Durch Betätigung der nachfolgenden Schlittenstufen (11) können die Schraubwerkzeuge (4,5) innerhalb der Schraubergruppe (6,7) relativ zueinander verstellt werden.

Die Schlittenstufen (10,11) sind in der vorerwähnten Weise vorzugsweise in einer Richtung und mit einer Linearachse aneinander gelagert und gegenseitig verstellbar. Alternativ kann zwischen den Schlittenstufen (10,11) auch eine Drehbeweglichkeit oder eine Linearbeweglichkeit in einer anderen linearen Achse bestehen. Dabei sind auch komplexere Kinematiken mit mehreren Achsen und Richtungsüberlagerungen möglich. Diese richtungsunterschiedliche gegenseitige Lagerung wird als Kaskadenanordnung bezeichnet.

Die mehrstufige Schlitteneinheit (9) besitzt eine geringere Breite und/oder Länge als der Basisträger (8). Sie kann an beliebig geeigneter Stelle auf dem Basisträger (8) positioniert sein. Durch die kleine Grundfläche können mehrere Schlitteneinheiten (9) nebeneinander auf dem Basisträger (8) angeordnet sein. In der gezeigten Ausführungsform sind zwei mehrstufige Schlitteneinheiten (9) in Richtung der x-Achse mit Abstand hintereinander angeordnet. Alternativ oder zusätzlich können mehrere Schlitteneinheiten (9) in Richtung der y-Achse nebeneinander angeordnet sein.

Die Schraubereinrichtung (3) kann außerdem ein oder mehrere Schraubwerkzeuge (4,5) oder Schraubergruppen auf einstufigen Schlitten oder Längsverstellungen (16) aufweisen. In der gezeigten Ausführungsform sind z.B. zwei solcher Verstelleinrichtungen (16) zwischen den mehrstufigen Schlitteneinheiten (9) angeordnet.

Um den Schraubwerkzeugen (4,5) eine zusätzliche Beweglichkeit zu geben, z.B. in der y-Richtung, können ein oder mehrere weitere Verstelleinrichtungen (17) in Form von Querverstellungen vorhanden sein. Vorzugsweise hat hierbei das Schraubwerkzeug (4,5) jeweils eine eigene Querverstellung (17). Die Querverstellung ist dabei zwischen der Konsole (18) des Schraubwerkzeuges (4,5) und der ein- oder mehrstufigen Schlitteneinheit (9,16) angeordnet. Die Querverstellung besitzt wiederum einen platten- oder rahmenförmigen Träger zur Aufnahme der Konsole (18) und einen geeigneten, z.B. elektromotorischen Stellantrieb (26) nebst Lagerung und Führung für den Träger. Alternativ können mehrere Schraubwerkzeuge (4,5) eine gemeinsame Querverstellung haben und hierzu auf einem gemeinsamen Subträger angeordnet sein. In der Kombination ergibt sich eine Art Kreuzschlitten zwischen den ein- oder mehrstufigen Schlitteneinheiten (9,16) und der Querverstellung (17).

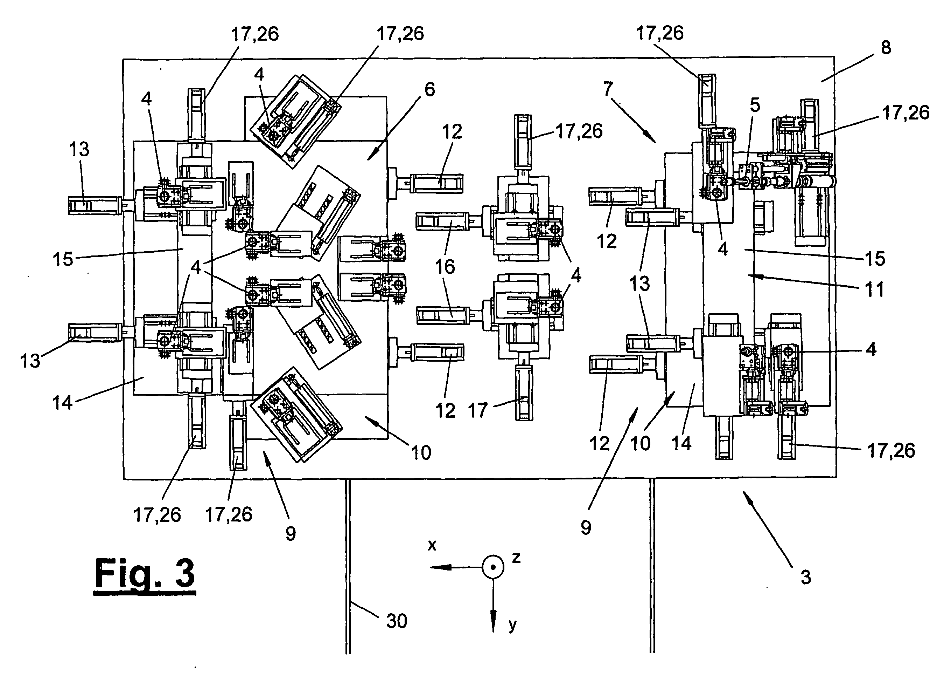

Wie Figur 3 verdeutlicht, können die Fahrwege der Querverstellung (17) auch schräg ausgerichtet sein. Zudem können die Querverstellungen (17) an der Unterseite schmale Sockel oder Stützen aufweisen, um Höhenunterschiede und eine evtl. räumliche Überlappung mit verschiedenen Schlittenstufen (10,11) zu ermöglichen.

Figur 3 zeigt diese Anordnung an der linken Schraubergruppe (6) mit den oberen und unteren randseitigen Schraubwerkzeugen (4), die mit schmalen Stützen auf der unteren Schlittenstufe (10) gelagert sind und in der Höhe die zweite Schlittenstufe (11) überragen, wobei ihre Querverstellung sich oberhalb der zweiten Schlittenstufe (11) befindet und diese in der Draufsicht überlappt.

In Figur 5 bis 7 und Figur 8 bis 10 sind zwei Varianten von Schraubwerkzeugen (4,5) im Detail und in verschiedenen Ansichten dargestellt. Die erste Ausführungsform von Figur 5 bis 7 zeigt ein in der z-Achse höhenverstellbares Schraubwerkzeug (4). Es besteht z.B. aus einer aufrechten, säulenartigen Konsole (18), die auf einer der Verstelleinrichtungen (9,16,17) oder direkt auf dem Basisträger (8) angeordnet ist. An der Konsole (18) ist die Schraubeinheit (20) mittels einer Höhenverstellung (24) beweglich gelagert.

Die Schraubeinheit (20) besteht z.B.. aus einer Schraubspindel (21), die an ihrem oberen Ende einen Schraubkopf (22) trägt, z.B. eine Schraubernuss. Am unteren Ende der Schraubspindel (21) ist ein Spindelantrieb (23) angeordnet. Die Teile sind untereinander zur Schraubeinheit (20) verbunden und werden mittels der Höhenverstellung (24) als Einheit auf und ab bewegt. Hierfür ist an der Konsole (18) eine Stellführung (32), hier eine Schiebeführung, mit einem Stellantrieb (26), z.B. einem Zylinder oder dergleichen angeordnet. Bei dieser Ausgestaltung hat die Schraubspindel (21) eine feste Länge und wird mit samt dem mitgeführten Spindelantrieb (23) auf und ab bewegt. Bei einer Schrägausrichtung der Schiebeführung (32) ist auch eine andere Bewegungsrichtung möglich.

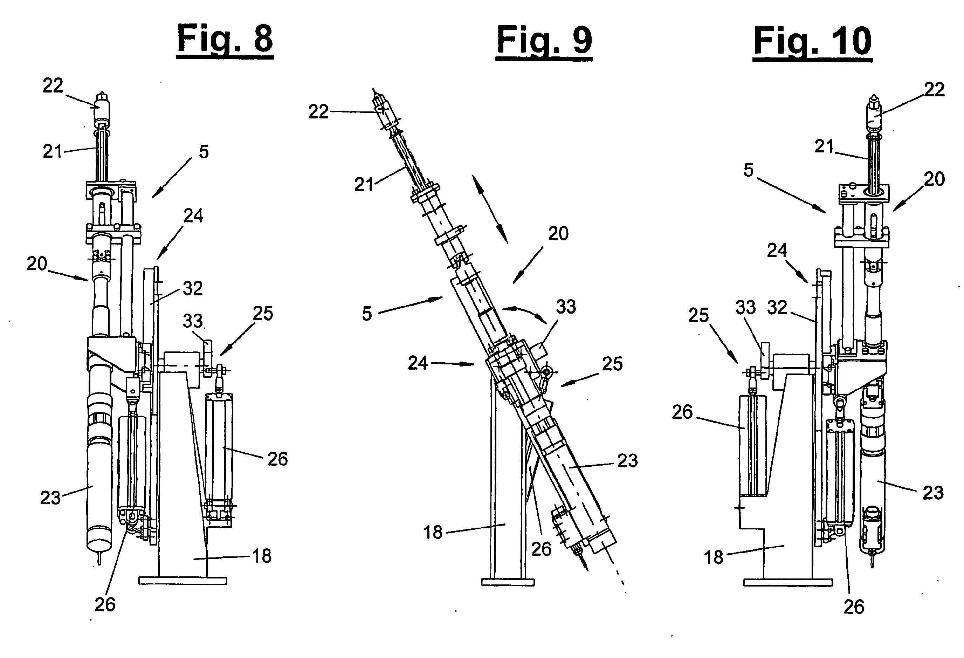

Figur 8 bis 10 zeigen eine zweite Variante mit einem schwenkbaren Schraubwerkzeug (5). Hier ist sowohl die vorbeschriebene Höhenverstellung (24), als auch eine Schwenkverstellung (25) vorhanden. Alternativ kann auch nur eine Schwenkverstellung (25) bestehen. In der gezeigten Ausführungsform ist die Höhenverstellung (24) an der Schwenkverstellung (25) gelagert und wird mit dieser gedreht bzw. geschwenkt. Hierfür ist an der Konsole (18) ein Stellantrieb (26), z.B. ein steuerbarer Zylinder, angeordnet, der über eine Schwenkführung (33), z.B. eine Kurbel, an der Schiebeführung (32) angreift, welche um eine horizontale Achse drehbar an der Konsole (18) gelagert ist. Alternativ kann der Stellantrieb (26) einen elektrischen Schrittmotor oder einen anderen mehrfach und genau positionierbaren Antrieb aufweisen, um beliebig unterschiedliche Schwenkwinkel der Schraubeinheit (20) mit der Schwenkverstellung (25) präzise einstellen zu können.

Die in Figur 2 bis 4 gezeigten Verstelleinrichtungen (9,16,17,25) bieten verschiedene kinematische Verstell- und Bewegungsmöglichkeiten zur Anpassung an unterschiedliche Bauteile oder Karosserien (2). Einerseits sind die in einer Schraubergruppe (6,7) zusammengefassten Schraubwerkzeuge (4,5) als Gruppe oder als Ganzes mittels einer Verstelleinrichtung (9) am Basisträger (8) beweglich gelagert. Sie befinden sich gemeinsam auf einem platten- oder rahmenförmigen Subträger (14,15) und werden mit diesem, z.B. auf der ersten Schlittenstufe (10) bewegt. Andererseits können innerhalb der Schraubergruppe (6,7) die Schraubwerkzeuge (4,5) zusätzlich mittels mindestens einer Zusatzachse relativ zueinander beweglich und verstellbar gelagert sein. Hierfür gibt es in den Ausführungsbeispielen unterschiedliche Möglichkeiten.

Diese zusätzliche Beweglichkeit kann z.B. durch die Relativbewegung der Schlittenstufen (10,11) gegeben sein. Auf den Subträgern (14,15) der Schlittenstufen (10,11) befinden sich z.B. jeweils mehrere Schraubwerkzeuge (4,5), welche Untergruppen bilden. Die Untergruppen werden durch die Schlittenbewegung zueinander verstellt.

Alternativ oder zusätzlich können innerhalb der Schraubergruppe (6,7) oder auch innerhalb einer oder mehrerer der vorwähnten Untergruppen Relativbewegungen der Schraubwerkzeuge (4,5) durch die Querverstellung(en) (17) erfolgen. Alternativ oder zusätzlich ist eine Relativbewegung der Schraubwerkzeuge (4,5) durch die Schwenkverstellung (25) möglich.

Die auf der Oberfläche des Basisträgers (8) montierten Verstelleinrichtungen (9,16,17), insbesondere die mehrstufige Schlitteneinheit (9), ermöglichen ferner eine Positionierung der Schraubwerkzeuge (4,5) außerhalb des Trägerrandes. Die Aufhebung der Positionsbindung an die Trägergeometrie bietet eine maximale Flexibilität und erlaubt eine einfache und billige Anpassung an neue und größere Bauteile (2) unter Beibehaltung des vorhandenen Basisträgers (8).

Die verschiedenen Antriebe (12,13,26) der Verstelleinrichtungen (9,16,17,24,25) und auch die Spindelantriebe (23) sind mit einer in Figur 1 schematisch dargestellten gemeinsamen Steuerung (34) verbunden. Hierbei kann es sich um eine eigenständige Steuerung (34) handeln. Alternativ kann die Steuerung in eine vorhandene Anlagen- oder Stationssteuerung oder auch in eine Robotersteuerung integriert sein. Die Steuerung ist z.B. als nummerische Mehrachssteuerung ausgebildet und kann insbesondere eine zweckentfremdete Robotersteuerung sein. Am Basisträger (8) sind außerdem die erforderlichen Betriebsmittel- und Energiezuführungen vorhanden.

Die Schraubereinrichtung (3) weist ferner eine auf dem Basisträger (8) angeordnete Zentrier- und Aushubeinheit (27) auf. Diese besteht z.B. aus vier an den Trägerecken angeordneten säulenartigen Gestellen, die sich in Richtung der z-Achse nach oben erstrecken und am oberen freien Ende einen Einweiser (28) mit eine oder mehreren schrägen Leitflächen aufweisen. Der Einweiser ist mit einer Hebevorrichtung (29) verbunden und kann in z-Achsenrichtung ferngesteuert und ggf. im Zusammenspiel mit der Steuerung (34) gehoben und gesenkt werden. Die Einweiser (28) treten mit dem Spindelrahmen (35) oder alternativ mit den Bauteilen (2) bzw. einem separaten Aggregateträger in Eingriff. Über die höhenbeweglichen Einweiser (28) ist es möglich, den Spindelrahmen (35) oder die Bauteile bzw. Bauteilträger aus der Anfangsposition und von ihrem Förderer zu lösen und gegenüber der Schraubereinrichtung (3) zu positionieren, insbesondere zu zentrieren. Hierdurch wird die erforderliche räumliche Zuordnung zwischen den Schraubwerkzeugen (4,5) und den zugehörigen Schraubstellen an den Spindelverlängerungen des Spindelrahmens (35) oder an den Bauteilen (2) geschaffen. Durch die Verstelleinrichtungen (24,25) können die Schraubköpfe (22) dann aus ihrer zurückgezogenen Ruheposition ausgefahren und in Betriebsstellung und in Eingriff mit den Schraubstellen gebracht werden. Hierbei ist auch eine schräge Zustellung mittels der Schwenkverstellung (25) oder geneigter Sockel (19) oder Konsolen (18) möglich.

Beim Schraubvorgang können die einzelnen Schraubwerkzeuge (4,5) mehrere Schraubvorgänge durchführen und dabei zwischen den einzelnen Vorgängen mittels der Verstelleinrichtung (9,16,17) auf dem Basisträger (8) mit einer entsprechend genauen Positionssteuerung und geeigneten Positionsgebern verfahren werden. In den Nebenzeiten beim Wechsel der Bauteile (2) können die Schraubköpfe (22) bei Direktverschraubungen mit geeigneten Schraubmitteln bestückt werden. Hierzu kann ggf. die Schraubereinheit (3) auch ein Stück seitlich aus der Schraubstation (1) herausbewegt werden.

Die einzelnen Schraubwerkzeuge (4,5) sind durch entsprechende Sockel (19) oder dergleichen vorzugsweise so in der Höhe aneinander angepasst, dass sich mit ihren oberen Enden bzw. Schraubköpfen (22) im Wesentlichen eine gleich hohe Störkontur ergibt. Die Länge der Konsolen (18) und die Höhe der Sockel (19) ist vorzugsweise so groß gewählt, dass sich in der Schraubstation (1) unter den Bauteilen (2) ein ausreichend großer Bewegungsraum für Werke ergibt, wenn im Störfall oder aus anderen Gründen die Schraubereinrichtung (3) aus der Schraubstation (1) herausbewegt wird und auf manuellen Schrauberbetrieb umgeschaltet wird.

Abwandlungen der gezeigten Ausführungsformen sind in verschiedener Weise möglich. Die verschiedenen dargestellten Varianten können beliebig untereinander vertauscht oder kombiniert werden. Dies gilt auch für die einzelnen Konstruktionsmerkmale der verschiedenen Ausführungsvarianten. Die Zahl und Anordnung der Schraubwerkzeuge (4,5) und der Verstelleinrichtungen (9,16,17,24,25) können beliebig variieren. Die kinematische Zuordnung der Längs- und Querverstellungen (16,17) kann vertauscht sein, wobei die Querverstellung (17) auf dem Basisträger (8) angeordnet ist und die Längsverstellung (16) trägt.

Auf den platten- oder rahmenförmigen Subträgern (14, 15) oder den Trägern der Längs- und Querverstellungen (16,17) können Montageraster, z.B. Schraubbohrungsraster, vorhanden sein. Ferner können Adapter zur Veränderung und Anpassung der Position der Schraubwerkzeuge (4,5) an diese Montageraster vorhanden sein. Mit Adaptern kann auch die Auskragung verändert und ein Schraubwerkzeug (4,5) außerhalb der Trägerkontur angeordnet werden.

Auf die Zentrier- und Aushubeinheit (27) kann alternativ verzichtet werden. Ferner sind konstruktive Abwandlugen der beschriebenen Baueinheiten möglich.

Die Bezugnahme auf eine Schraubstation (1) und eine Schraubereinrichtung (3) nebst Schraubwerkzeugen (4,5) beinhaltet auch beliebige andere Arten von Füge- oder Montageeinrichtungen und Füge- oder Montagewerkzeugen.

### BEZUGSZEICHENLISTE

- 1: Schraubstation, Montagestation
- 2: Bauteil, Karosserie
- 3: Schraubereinrichtung
- 4: Schraubwerkzeug
- 5: Schraubwerkzeug schwenkbar
- 6: Schraubergruppe
- 7: Schraubergruppe
- 8: Basisträger, Platte
- 9: Verstelleinrichtung, mehrstufige Schlitteneinheit
- 10: erste Schlittenstufe
- 11: zweite Schlittenstufe
- 12: erster Schlittenantrieb
- 13: zweiter Schlittenantrieb
- 14: Subträger
- 15: Subträger
- 16: Verstelleinrichtung, einstufige Längsverstellung
- 17: Verstelleinrichtung, Querverstellung
- 18: Konsole
- 19: Sockel
- 20: Schraubeinheit
- 21: Schraubspindel
- 22: Schraubkopf
- 23: Spindelantrieb
- 24: Verstelleinrichtung, Höhenverstellung
- 25: Verstelleinrichtung, Schwenkverstellung
- 26: Stellantrieb
- 27: Zentrier- und Aushubeinheit
- 28: Einweiser
- 29: Hebevorrichtung
- 30: Führung, Schiene
- 31: Boden
- 32: Stellführung, Schiebeführung
- 33: Stellführung, Schwenkführung
- 34: Steuerung
- 35: Spindelträger, Spindelrahmen

## Patentansprüche

1. Automatische Schraubereinrichtung (3) zum Fügen von Bauteilen (2), insbesondere Fahrzeugkarosserien, in einer Schraubstation (1), bestehend aus einem Basisträger (8) mit mehreren daran mittels Verstelleinrichtungen in der Hauptebene des Basisträgers (8) mehrachsig beweglich gelagerten automatischen Schraubwerkzeugen (4,5), wobei die Schraubwerkzeuge (4,5) in ihrer Position relativ zueinander verstellbar sind, **dadurch gekennzeichnet, dass** mehrere der Schraubwerkzeuge (4,5) in mindestens einer Schraubergruppe (6,7) zusammengefasst und gemeinsam mittels einer Verstelleinrichtung (9) am Basisträger (8) beweglich gelagert und relativ zu anderen Schraubwerkzeugen (4,5) verstellbar sind.

2. Schraubereinrichtung nach Anspruch 1, **dadurch gekennzeichnet, dass** innerhalb der Schraubergruppe (6,7) zusätzlich ein oder mehrere Schraubwerkzeuge (4,5) mittels mindestens einer Verstelleinrichtung (9,17,25) relativ zueinander beweglich gelagert sind.

3. Schraubereinrichtung nach Anspruch 1 oder 2, **dadurch gekennzeichnet, dass** mindestens eine Verstelleinrichtung als mehrstufige teleskopierbare oder kaskadierbare Schlitteneinheit (9) ausgebildet ist.

4. Schraubereinrichtung nach Anspruch 3, **dadurch gekennzeichnet, dass** die Schlitteneinheit (9) mehrere in mindestens einer Achse, vorzugsweise einer Linearachse, relativ zueinander bewegliche Schlittenstufen (10,11) aufweist.

5. Schraubereinrichtung nach Anspruch 3 oder 4, **dadurch gekennzeichnet, dass** die Schlittenstufen (10,11) aneinander gelagert sind.

6. Schraubereinrichtung nach Anspruch 3, 4 oder 5, **dadurch gekennzeichnet, dass** zumindest eine Schlittenstufe (10) einen platten- oder rahmenförmigen Subträger (14,15) mit mehreren in einer Schraubergruppe (6,7) zusammengefassten Schraubwerkzeugen (4,5) aufweist.

7. Schraubereinrichtung nach einem der vorhergehenden Ansprüche, **dadurch gekennzeichnet, dass** zumindest ein Schraubwerkzeug (4,5) aus der Schraubergruppe (6,7) auf mindestens einer nachfolgenden Schlittenstufe (11) und/oder auf einer Querverstellung (17) angeordnet ist.

8. Schraubereinrichtung nach einem der vorhergehenden Ansprüche, **dadurch gekennzeichnet, dass** die Schlittenstufen (10,11) eigene steuerbare Schlittenantriebe (12,13) aufweisen.

9. Schraubereinrichtung nach einem der vorhergehenden Ansprüche, **dadurch gekennzeichnet, dass** die Verstelleinrichtungen (9,16,17) eine geringere Breite und Länge als der Basisträger (8) aufweist.

10. Schraubereinrichtung nach einem der vorhergehenden Ansprüche, **dadurch gekennzeichnet, dass** auf dem Basisträger (8) mehrere Schlitteneinheiten (9) nebeneinander angeordnet sind.

11. Schraubereinrichtung nach einem der vorhergehenden Ansprüche, **dadurch gekennzeichnet, dass** jedes Schraubwerkzeug (4,5) eine eigene lineare Querverstellung (17) mit einem steuerbaren Stellantrieb (26) aufweist.

12. Schraubereinrichtung nach einem der vorhergehenden Ansprüche, **dadurch gekennzeichnet, dass** die Querverstellung (17) zwischen dem Schraubwerkzeug (4,5) und der mehrstufigen Schlitteneinheit (9) oder einer einstufigen Längsverstellung (16) angeordnet ist.

13. Schraubereinrichtung nach einem der vorhergehenden Ansprüche, **dadurch gekennzeichnet, dass** das Schraubwerkzeug (4,5) eine Konsole (18) und eine daran ein- oder mehrachsig bewegliche Schraubeinheit (20) aufweist.

14. Schraubereinrichtung nach einem der vorhergehenden Ansprüche, **dadurch gekennzeichnet, dass** zwischen der Konsole (18) und der Schraubeinheit (20) eine Höhenverstellung (24) angeordnet ist.

15. Schraubereinrichtung nach einem der vorhergehenden Ansprüche, **dadurch gekennzeichnet, dass** zwischen der Konsole (18) und der Schraubeinheit (20) eine Schwenkverstellung (25) angeordnet ist.

16. Schraubereinrichtung nach einem der vorhergehenden Ansprüche, **dadurch gekennzeichnet, dass** die Schraubeinheit (20) eine Schraubspindel (21) mit einem Schraubkopf (22) und einem mitbewegten Spindelantrieb (23) aufweist.

17. Schraubereinrichtung nach einem der vorhergehenden Ansprüche, **dadurch gekennzeichnet, dass** der Basisträger (8) platten- oder rahmenförmig ausgebildet ist.

18. Schraubereinrichtung nach einem der vorhergehenden Ansprüche, **dadurch gekennzeichnet, dass** der Basisträger (8) ein Fahrwerk und eine Führung (30), vorzugsweise eine Schienenführung, zum Ein- und Ausfahren aus der Schraubstation (1) aufweist.

19. Schraubereinrichtung nach einem der vorhergehenden Ansprüche, **dadurch gekennzeichnet, dass** der Basisträger (8) eine Zentrier- und Aushubeinheit (27) aufweist.

20. Schraubereinrichtung nach einem der vorhergehenden Ansprüche, **dadurch gekennzeichnet, dass** die Zentrier- und Aushubeinheit (27) aus mehreren Einweisern (28) mit Hebevorrichtungen (29) besteht.

21. Schraubereinrichtung nach einem der vorhergehenden Ansprüche, **dadurch gekennzeichnet, dass** die Schraubereinrichtung (3) eine Steuerung (34) aufweist, mit der Verstelleinrichtungen (9,16,17,24,25) und die Spindelantriebe (23) verbunden sind.

22. Schraubereinrichtung nach einem der vorhergehenden Ansprüche, **dadurch gekennzeichnet, dass** die Steuerung (34) als nummerische Mehrachssteuerung, vorzugsweise als Robotersteuerung, ausgebildet ist.

23. Schraubstation zum Fügen von Bauteilen (2), insbesondere Fahrzeugkarosserien, mit einer automatischen Schraubereinrichtung (3), **dadurch gekennzeichnet, dass** die Schraubereinrichtung (3) eine Ausbildung nach einem der vorhergehenden Ansprüche aufweist.

24. Schraubstation nach Anspruch 23, **dadurch gekennzeichnet, dass** zwischen den Bauteilen (2) und der Schraubereinrichtung (3) ein Spindelträger (35) angeordnet ist.

25. Verfahren zum Fügen von Bauteilen (2), insbesondere Fahrzeugkarosserien, in einer Schraubstation (1) mit einer automatischen Schraubereinrichtung (3), bestehend aus einem Basisträger (8) und mit mehreren daran mittels Verstelleinrichtungen in der Hauptebene des Basisträgers (8) mehrachsig beweglich gelagerten automatischen Schraubwerkzeugen (4,5), wobei die Schraubwerkzeuge (4,5) in ihrer Position relativ zueinander verstellbar sind, **dadurch gekennzeichnet, dass** mehrere der Schraubwerkzeuge (4,5) in mindestens einer Schraubergruppe (6,7) zusammengefasst und gemeinsam mittels einer Verstelleinrichtung (9) relativ zu anderen Schraubwerkzeugen (4,5) verstellt werden.

26. Verfahren nach Anspruch 25, **dadurch gekennzeichnet, dass** innerhalb der Schraubergruppe (6,7) zusätzlich ein oder mehrere Schraubwerkzeuge (4,5) mittels mindestens einer Verstelleinrichtung (9,17,25) relativ zueinander verstellt werden.

## Claims

1. Automatic screwdriver apparatus (3) for joining components (2), in particular motor-vehicle bodies, in a screwing station (1), said apparatus consisting of a base carrier (8) with a plurality of automatic screwing tools (4, 5) which are mounted thereon so as to be movable in multiple directions in the principal plane of the base carrier (8) by means of adjustment devices, wherein the screwing tools (4, 5) are adjustable with respect to their position relative to each other, **characterized in that** a plurality of the screwing tools (4, 5) are combined to form at least one screwdriver group (6, 7), are jointly mounted so as to be movable on the base carrier (8) by means of an adjustment device (9), and are adjustable relative to other screwing tools (4, 5).

2. Screwdriver apparatus according to Claim 1, **characterized in that**, within the screwdriver group (6, 7), one or more screwing tool (s) (4, 5) is/are additionally mounted so as to be movable relative to each other by means of at least one adjustment device (9, 17, 25).

3. Screwdriver apparatus according to Claim 1 or 2, **characterized in that** at least one adjustment device is realized as a multistage telescoping or cascading carriage unit (9).

4. Screwdriver apparatus according to Claim 3, **characterized in that** the carriage unit (9) has a plurality of carriage stages (10, 11) which are movable relative to each other in at least one axis, preferably a linear axis.

5. Screwdriver apparatus according to claim 3 or 4, **characterized in that** the carriage stages (10, 11) are mounted on each other.

6. Screwdriver apparatus according to Claim 3, 4 or 5, **characterized in that** at least one carriage stage (10) has a plate-type or frame-type subcarrier (14, 15) comprising a plurality of screwing tools (4, 5) combined to form a screwdriver group (6, 7).

7. Screwdriver apparatus according to any one of the preceding claims, **characterized in that**, of the screwdriver group (6, 7), at least one screwing tool (4, 5) is disposed on at least one succeeding carriage stage (11) and/or on a transverse adjustment device (17).

8. Screwdriver apparatus according to any one of the preceding claims, **characterized in that** the carriage stages (10, 11) have their own controllable carriage drives (12, 13).

9. Screwdriver apparatus according to any one of the preceding claims, **characterized in that** the adjustment devices (9, 16, 17) are of a lesser width and length than the base carrier (8).

10. Screwdriver apparatus according to any one of the preceding claims, **characterized in that** a plurality of carriage units (9) are disposed next to each other on the base carrier (8).

11. Screwdriver apparatus according to any one of the preceding claims, **characterized in that** each screwing tool (4, 5) has its own linear transverse adjustment device (17) with a controllable actuating drive (26).

12. Screwdriver apparatus according to any one of the preceding claims, **characterized in that** the transverse adjustment device (17) is disposed between the screwing tool (4, 5) and the multistage carriage unit (9) or a single-stage longitudinal adjustment device (16).

13. Screwdriver apparatus according to any one of the preceding claims, **characterized in that** the screwing tool (4, 5) has a bracket (18) and a screwing unit (20) which is movable thereon in one or more directions.

14. Screwdriver apparatus according to any one of the preceding claims, **characterized in that** a height adjustment device (24) is disposed between the bracket (18) and the screwing unit (20).

15. Screwdriver apparatus according to any one of the preceding claims, **characterized in that** a tilt adjustment device (25) is disposed between the bracket (18) and the screwing unit (20).

16. Screwdriver apparatus according to any one of the preceding claims, **characterized in that** the screwing unit (20) has a screwing spindle (21) with a screwing head (22) and a concomitantly moved spindle drive (23).

17. Screwdriver apparatus according to any one of the preceding claims, **characterized in that** the base carrier (8) is realized in the form of a plate or a frame.

18. Screwdriver apparatus according to any one of the preceding claims, **characterized in that** the base carrier (8) has a travelling mechanism and a guide (30), preferably a rail guide, for moving into and out of the screwing station (1).

19. Screwdriver apparatus according to any one of the preceding claims, **characterized in that** the base carrier (8) has a centring and raising unit (27).

20. Screwdriver apparatus according to any one of the preceding claims, **characterized in that** the centring and raising unit (27) consists of a plurality of orientation devices (28) with lifting devices (29).

21. Screwdriver apparatus according to any one of the preceding claims, **characterized in that** the screwdriver apparatus (3) has a controller (34), to which adjustment devices (9, 16, 17, 24, 25) and the spindle drives (23) are connected.

22. Screwdriver apparatus according to any one of the preceding claims, **characterized in that** the controller (34) is realized as a numerical multi-axis controller, preferably as a robot controller.

23. Screwing station for joining components (2), in particular motor-vehicle bodies, having an automatic screwdriver apparatus (3), **characterized in that** the screwdriver apparatus (3) is realized according to any one of the preceding claims.

24. Screwing station according to claim 23, **characterized in that** a spindle carrier (35) is disposed between the components (2) and the screwdriver apparatus (3).

25. Method for joining components (2), in particular motor-vehicle bodies, in a screwing station (1) having an automatic screwdriver apparatus (3), said apparatus consisting of a base carrier (8) and with a plurality of automatic screwing tools (4, 5) which are mounted thereon so as to be movable in multiple directions in the principal plane of the base carrier (8) by means of adjustment devices, wherein the screwing tools (4, 5) are adjustable with respect to their position relative to each other, **characterized in that** a plurality of the screwing tools (4, 5) are combined to form at least one screwdriver group (6, 7) and are jointly adjusted relative to other screwing tools (4, 5) by means of an adjustment device (9).

26. Method according to Claim 25, **characterized in that**, within the screwdriver group (6, 7), one or more screwing tool(s) (4, 5) is/are additionally adjusted relative to each other by means of at least one adjustment device (9, 17, 25).

## Revendications

1. Installation de visseuses automatique (3) pour l'assemblage de sous-ensembles (2), notamment de carrosseries de véhicules, dans un poste de vissage (1), composée d'un support de base (8) avec plusieurs outils de vissage automatiques (4, 5) montés sur celui-ci de manière mobile suivant plusieurs axes dans le plan principal du support de base (8) au moyen de dispositifs de réglage, la position relative des outils de vissage (4, 5) les uns par rapport aux autres étant réglable, **caractérisée en ce que** plusieurs des outils de vissage (4, 5) sont regroupés dans au moins un groupe de visseuses (6, 7) et sont montés ensemble de manière mobile sur le support de base (8) au moyen d'un dispositif de réglage (9), et sont réglables par rapport à d'autres outils de vissage (4, 5).

2. Installation de visseuses selon la revendication 1, **caractérisée en ce que**, au sein du groupe de visseuses (6, 7), un ou plusieurs outils (4, 5) sont en plus montés de manière mobile les uns par rapport aux autres au moyen d'au moins un dispositif de réglage (9, 17, 25).

3. Installation de visseuses selon la revendication 1 ou 2, **caractérisée en ce qu'**au moins un dispositif de réglage est réalisé sous la forme d'une unité de chariots (9) à plusieurs étages fonctionnant de manière télescopique ou en cascade.

4. Installation de visseuses selon la revendication 3, **caractérisée en ce que** l'unité de chariots (9) comporte plusieurs étages de chariots (10, 11) mobiles les uns par rapport aux autres suivant au moins un axe, de préférence un axe linéaire.

5. Installation de visseuses selon la revendication 3 ou 4, **caractérisée en ce que** les étages de chariots (10, 11) sont montés les uns contre les autres.

6. Installation de visseuses selon la revendication 3, 4 ou 5, **caractérisée en ce qu'**au moins un étage de chariot (10) comporte un sous-support (14, 15) en forme de plateau ou de cadre avec plusieurs outils de vissage (4, 5) regroupés dans un groupe de visseuses (6, 7).

7. Installation de visseuses selon l'une des revendications précédentes, **caractérisée en ce qu'**au moins un outil de vissage (4, 5) du groupe de visseuses (6, 7) est disposé sur au moins un étage de chariot (11) suivant et/ou sur un dispositif de réglage transversal (17).

8. Installation de visseuses selon l'une des revendications précédentes, **caractérisée en ce que** les étages de chariots (10, 11) comportent des entraînements de chariots (12, 13) propres pouvant être commandés.

9. Installation de visseuses selon l'une des revendications précédentes, **caractérisée en ce que** les dispositifs de réglage (9, 16, 17) ont une largeur et une longueur inférieures à celles du support de base (8).

10. Installation de visseuses selon l'une des revendications précédentes, **caractérisée en ce que** plusieurs unités de chariots (9) sont disposées les unes à côté des autres sur le support de base (8).

11. Installation de visseuses selon l'une des revendications précédentes, **caractérisée en ce que** chaque outil de vissage (4, 5) comporte un dispositif de réglage transversal linéaire (17) propre, avec un entraînement de réglage (26) pouvant être commandé.

12. Installation de visseuses selon l'une des revendications précédentes, **caractérisée en ce que** le dispositif de réglage transversal (17) est disposé entre l'outil de vissage (4, 5) et l'unité de chariots à plusieurs étages (9) ou un dispositif de réglage longitudinal à un étage (16).

13. Installation de visseuses selon l'une des revendications précédentes, **caractérisée en ce que** l'outil de vissage (4, 5) comporte une console (18) et une unité de vissage (20) mobile sur celle-ci suivant un ou plusieurs axes.

14. Installation de visseuses selon l'une des revendications précédentes, **caractérisée en ce qu'**un réglage en hauteur (24) est disposé entre la console (18) et l'unité de vissage (20).

15. Installation de visseuses selon l'une des revendications précédentes, **caractérisée en ce qu'**un réglage pivotant (25) est disposé entre la console (18) et l'unité de vissage (20).

16. Installation de visseuses selon l'une des revendications précédentes, **caractérisée en ce que** l'unité de vissage (20) comporte une broche de vissage (21) avec une tête de vissage (22) et un entraînement de broche (23) associé.

17. Installation de visseuses selon l'une des revendications précédentes, **caractérisée en ce que** le support de base (8) est réalisé sous forme de plaque ou de cadre.

18. Installation de visseuses selon l'une des revendications précédentes, **caractérisée en ce que** le support de base (8) comporte un châssis de roulement et un guidage (30), de préférence un guidage par rails, pour l'entrée dans le poste de vissage (1) et la sortie de celui-ci.

19. Installation de visseuses selon l'une des revendications précédentes, **caractérisée en ce que** le support de base (8) comporte une unité de centrage et de levage pour le dégagement (27).

20. Installation de visseuses selon l'une des revendications précédentes, **caractérisée en ce que** l'unité de centrage et de levage pour le dégagement (27) se compose de plusieurs positionneurs (28) avec des dispositifs de levage (29).

21. Installation de visseuses selon l'une des revendications précédentes, **caractérisée en ce que** l'installation de visseuses (3) comporte une commande (34) à laquelle des dispositifs de réglage (9, 16, 17, 24, 25) et les entraînements des broches (23) sont reliés.

22. Installation de visseuses selon l'une des revendications précédentes, **caractérisée en ce que** la commande (34) est réalisée sous la forme d'une commande numérique multiaxes, de préférence sous la forme d'une commande de robots.

23. Poste de vissage pour l'assemblage de sous-ensembles (2), notamment de carrosseries de véhicules, avec une installation de visseuses automatique (3), **caractérisé en ce que** l'installation de visseuses (3) présente une configuration selon l'une des revendications précédentes.

24. Poste de vissage selon la revendication 23, **caractérisé en ce qu'**un support de broche (35) est disposé entre les sous-ensembles (2) et l'installation de visseuses (3)

25. Procédé pour l'assemblage de sous-ensembles (2), notamment de carrosseries de véhicules, dans un poste de vissage (1), au moyen d'une installation de visseuses automatique (3) composée d'un support de base (8) et de plusieurs outils de vissage automatiques (4, 5) montés sur celui-ci de manière mobile suivant plusieurs axes dans le plan principal du support de base (8) au moyen de dispositifs de réglage, la position relative des outils de vissage (4, 5) les uns par rapport aux autres étant réglable, **caractérisé en ce que** plusieurs des outils de vissage (4, 5) sont regroupés dans au moins un groupe de visseuses (6, 7) et sont déplacés ensemble au moyen d'un dispositif de réglage (9) par rapport à d'autres outils de vissage (4, 5).

26. Procédé selon la revendication 25, **caractérisé en ce que**, au sein du groupe de visseuses (6, 7), un ou plusieurs outils de vissage (4, 5) sont en plus déplacés les uns par rapport aux autres au moyen d'au moins un dispositif de réglage (9, 17, 25).
